# FASCICULE DE BREVET EUROPEEN

(11) **EP 0 656 246 B1**
(45) Date de publication et mention de la délivrance du brevet: **30.06.1999**
(21) Numéro de dépôt: 94402718.4
(22) Date de dépôt: 29.11.1994
(51) Int. Cl.: B25B 27/10, B21D 39/04

(54) **Procédé pour rétreindre une bague à rétreindre placée derrière un obstacle axial et dispositif pour sa mise en oeuvre**
Verfahren zum Krimpen eines Krimprings welcher sich in Achsrichtung hinter einem Hindernis befindet und Vorrichtung hierfür
Method of crimping a crimping ring placed axially behind an obstacle und device therefor

(30) Priorité: 03.12.1993 FR 9314514
(43) Date de publication de la demande: 07.06.1995
(73) Titulaire: ETABLISSEMENTS CAILLAU, Société anonyme à Directoire et Conseil de Surveillance, 92130 Issy-Les-Moulineaux (FR)
(72) Inventeur: Detable, Pascal, F-41130 Gievres (FR); Andre, Michel, F-41200 Romorantin Lanthenay (FR)
(74) Mandataire: Hasenrader, Hubert

(56) Documents cités:
- DE-A- 1 907 956
- DE-A- 2 612 345
- DE-A- 4 206 439
- FR-A- 2 155 679
- US-A- 3 762 209
- US-A- 4 885 928

## Description

La présente invention concerne un procédé et un dispositif pour rétreindre une bague à rétreindre, placée autour d'un objet à serrer sur un support cylindrique et derrière un obstacle axial lié au support, au moyen d'un outil de rétreint comportant des mâchoires susceptibles d'adopter une position expansée et une position resserrée.

L'utilisation de bagues à rétreindre dans l'industrie présente un avantage certain dans la mesure où celles-ci sont peu coûteuses et assurent un serrage permanent.

Par exemple dans l'industrie automobile, les bagues à rétreindre sont très appréciées pour assurer la fixation des soufflets disposés autour des liaisons mécaniques, telles que des joints homocinétiques, entre deux parties d'une transmission d'un véhicule, notamment du type "traction avant". Lors de l'assemblage d'une telle transmission, on adapte d'abord la première extrémité de l'arbre médian de la transmission, par exemple l'arbre sortant du moteur, dans un premier bol de joint homocinétique, et l'on place un premier soufflet dont l'extrémité large enserre le bol et dont l'extrémité étroite enserre l'arbre médian. On peut alors utiliser un procédé classique pour rétreindre une grande bague sur l'extrémité large qui, du côté du bol, est aisément accessible à un outil de rétreint de cette grande bague, et une petite bague sur l'extrémité étroite qui, du côté de l'arbre médian, est accessible à un autre outil de rétreint de cette petite bague.

Ensuite, à partir de la seconde extrémité de l'arbre médian, on enfile sur cet arbre un second soufflet par son extrémité étroite. Un problème se pose lorsque, après avoir adapté la seconde extrémité de l'arbre médian dans un second bol de joint homocinétique et avoir déplacé axialement le second soufflet de telle sorte que son extrémité large enserre le second bol et que son extrémité étroite enserre l'arbre médian au voisinage de sa seconde extrémité, on se propose de fixer ce second soufflet. En effet, si l'extrémité large est accessible à un outil de rétreint du côté du second bol, et peut donc être fixée par une grande bague à rétreindre, l'accès d'un outil de rétreint à l'extrémité étroite du second soufflet est interdit par le premier et le second bols.

De fait, bien que rien n'empêche de disposer une petite bague à rétreindre sur l'extrémité étroite du second soufflet avant d'enfiler ce dernier sur l'arbre, aucun procédé connu ne permet de rétreindre une telle bague, ce qui rend son utilisation impossible.

On est par conséquent contraint, pour fixer l'extrémité étroite du second soufflet, à utiliser, à la place d'une bague à rétreindre qui présente les avantages précédemment évoqués, un collier de serrage plus coûteux et moins pratique.

De façon générale, l'état de la technique ne permet pas d'utiliser une bague à rétreindre pour serrer un objet sur un support cylindrique lorsqu'un obstacle axial est lié au support, en avant de la partie dudit support où l'on désire serrer cet objet.

Comme on vient de le voir, ceci présente des inconvénients pratiques et implique des surcoûts.

L'invention a pour but de remédier à ces inconvénients en proposant un procédé qui permette d'utiliser une bague à rétreindre même lorsqu'elle doit être placée derrière un obstacle axial, ainsi qu'un dispositif pour la mise en oeuvre d'un tel procédé.

Ce procédé comporte les étapes suivantes :
a) - on enfile l'outil de rétreint, avec ses mâchoires en position expansée, autour du support, par dessus l'obstacle axial, jusqu'à ce que lesdites mâchoires soient disposées dans le plan radial de la bague à rétreindre,
b) - on met en place dans les mâchoires en position expansée de l'outil de rétreint, par l'arrière de l'obstacle axial, une entretoise présentant une ouverture centrale sensiblement circulaire et susceptible d'adopter elle-même une position resserrée et une position expansée dans laquelle la périphérie externe de ladite entretoise est adaptée à la périphérie interne des mâchoires en position expansée, tandis que le diamètre de son ouverture centrale est sensiblement égal à celui de la bague à rétreindre
c) - enfin on procède au serrage de l'outil de rétreint pour amener les mâchoires et l'entretoise qu'elles contiennent dans leurs positions resserrées respectives.

Comme on le comprend aisément, ce procédé permet de rétreindre une bague à rétreindre placée derrière un obstacle axial. Dans l'exemple précité, qui concerne la fixation des soufflets sur un arbre de transmission, ce procédé permet même de n'utiliser qu'un seul outil de rétreint dont la périphérie interne des mâchoires est adaptée au rétreint de la grande bague à rétreindre, pour rétreindre successivement cette grande bague puis, en insérant dans les mâchoires une entretoise du type précité, la petite bague à rétreindre.

Le procédé utilise avantageusement une entretoise qui comprend au moins deux parties mobiles l'une par rapport à l'autre dans son plan, auquel cas l'étape de mise en place de l'entretoise est précédée par une étape d'éloignement relatif desdites parties pour définir un passage suffisant pour au moins le support de l'objet à serrer et par une étape de rapprochement de ces parties autour dudit support jusqu'à ce que le passage soit sensiblement supprimé.

Le procédé pour rétreindre et son dispositif de mise en oeuvre seront mieux compris à la lecture de la description détaillée qui suit. La description se réfère aux dessins sur lesquels :
- la figure 1 représente une transmission automobile assemblée,
- la figure 2 montre la partie gauche de la transmission de la figure 1 juste avant le rétreint d'une grande bague à rétreindre sur l'extrémité large d'un soufflet,
- la figure 3 est analogue à la figure 2 et illustre le procédé en vue du rétreint d'une petite bague sur l'extrémité étroite du soufflet,
- la figure 4 montre une entretoise en position expansée,
- la figure 5 montre la même entretoise en position resserrée,
- la figure 6 présente une entretoise en au moins deux parties déplacées l'une par rapport à l'autre pour définir un passage.

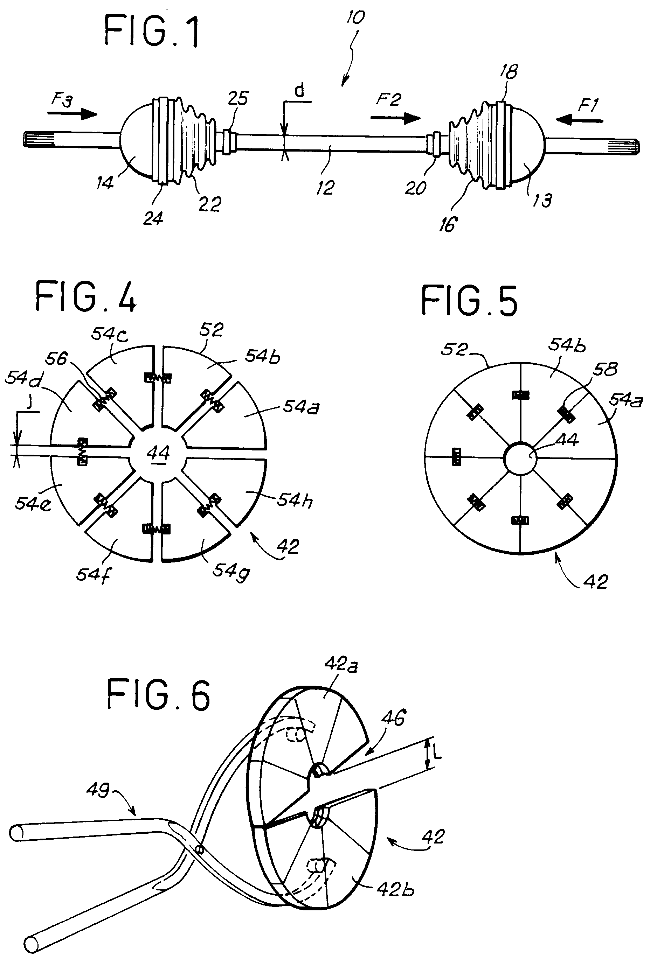

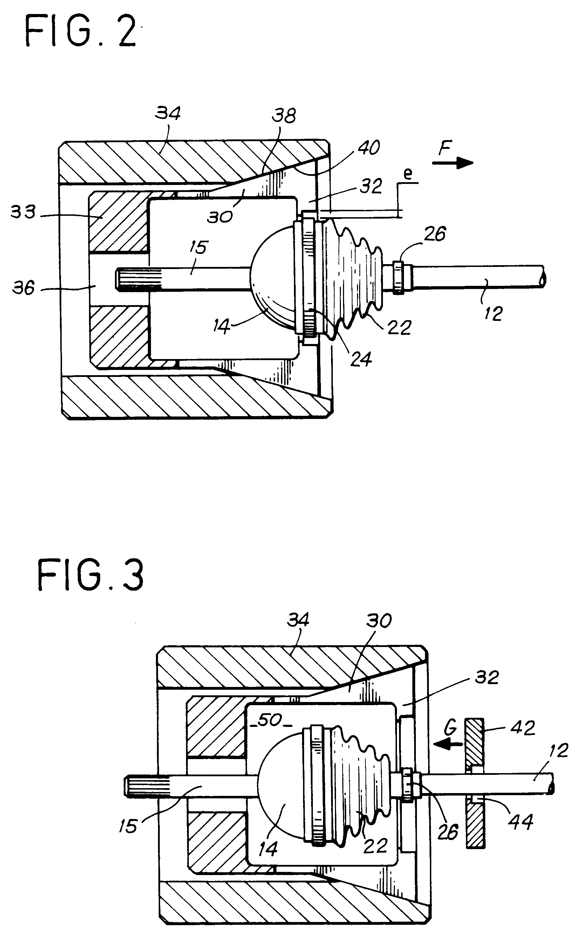

La figure 1 montre une transmission 10 assemblée et permet de présenter le problème à résoudre. Cette transmission 10 comporte un arbre médian de transmission 12 aux extrémités duquel sont attelés un premier et un second bols de joints homocinétiques respectivement désignés par les références 13 et 14. Un premier soufflet 16 présente une extrémité large serrée sur le bol au moyen d'une première bague 18 et une extrémité étroite serrée sur l'arbre au moyen d'une seconde bague 20. Comme on l'a indiqué précédemment, la première bague 18 est aisément accessible du côté du bol dans le sens de la flèche F1 et, si le deuxième bol 14 n'est pas encore monté, la seconde bague 20 est également accessible dans le sens de la flèche F2.

Un second soufflet 22 présente une extrémité large qui est fixée sur le second bol 14 au moyen d'une grande bague 24 et une extrémité étroite qui est serrée sur l'arbre mais, cette fois, au moyen d'un collier de serrage 25. En effet, si la grande bague 24 est accessible du côté du second bol dans le sens de la flèche F3, aucun procédé connu ne permet de rétreindre une bague située dans la position du collier 25 lorsque le premier bol 13 est déjà monté. On est donc obligé d'utiliser un collier de serrage qui présente, par rapport à une bague à rétreindre, les inconvénients exposés en introduction.

L'outil de rétreint représenté aux figures 2 et 3 comporte de manière connue une pince de rétreint 30 munie de mâchoires de rétreint 32, ainsi qu'un cône de serrage 34 disposé autour de la pince de rétreint et mobile en translation par rapport à elle. La pince de rétreint comporte un alésage axial 36 qui permet de l'enfiler sur un support cylindrique tel que l'arbre 12 ou la portion d'arbre 15 et présente, sur une partie au moins, une périphérie externe conique 38. Il doit être entendu que ce support cylindrique peut être à section circulaire, polygonale ou autre.

Le cône de serrage comporte, sur une partie correspondante, une périphérie interne conique 40. Pour rétreindre la bague 24, après avoir amené les mâchoires 32 dans son plan, on maintient la pince de rétreint 30 tout en déplaçant le cône de serrage 34 dans le sens de la flèche F pour resserrer les mâchoires de rétreint 32. En effet, ces mâchoires 32 présentent une position expansée représentée sur la figure 2, dans laquelle elles sont écartées de la bague 24 d'une distance e, et une position resserrée, non représentée, pour rétreindre la bague.

De manière connue, les mâchoires peuvent être constituées par une pluralité de portions de cône, écartées les unes des autres pour définir la position expansée, et rapprochées pour définir la position resserrée. Ces portions de cône sont solidaires sur une partie qui détermine un cylindre 33.

Dans toute la suite, on considérera que le sens de la flèche F définit le sens "vers l'arrière", c'est-à-dire que l'arbre 12 se trouve en arrière du bol 14, le sens opposé étant évidemment le sens "vers l'avant".

Sur les figures 2 et 3, le collier de serrage 25 de la figure 1 est remplacé par une bague à rétreindre 26. Le bol 14 et le soufflet 22 constituent un obstacle axial derrière lequel est située la bague à rétreindre 26. Cet obstacle axial est lié au support, c'est-à-dire qu'il n'est pas démontable en vue du rétreint de la bague 26. Dans l'exemple représenté, l'obstacle est cinématiquement lié au support que constitue l'arbre 12.

Les figures 2 et 3 permettent de mieux comprendre le procédé pour rétreindre cette bague 26. Dans une première étape, on enfile l'outil de rétreint, comprenant la pince de rétreint 30 et le cône de serrage 34, par dessus l'obstacle axial, constitué par le bol 14 et par le soufflet 22, jusqu'à ce que les mâchoires 32 soient disposées dans le plan radial de la bague à rétreindre 26.

La périphérie interne des mâchoires 32 n'étant pas adaptée pour rétreindre cette bague 26, on met en place, dans ces mâchoires en position expansée de l'outil de rétreint et par l'arrière de l'obstacle axial, c'est-à-dire dans le sens de la flèche G de la figure 3 (vers l'avant), une entretoise 42 présentant une ouverture centrale 44 sensiblement circulaire.

L'entretoise 42 est susceptible d'adopter une position resserrée visible sur la figure 5 et une position expansée illustrée par la figure 4. Dans cette position expansée, la périphérie externe de l'entretoise est adaptée à la périphérie interne des mâchoires 32 de l'outil de rétreint quand celles-ci sont elles-mêmes en position expansée. Ceci permet d'insérer l'entretoise 42 dans les mâchoires 32 en position expansée. Toujours dans la position expansée de l'entretoise, le diamètre de son ouverture centrale 44 est sensiblement égal au diamètre de la bague à rétreindre 26, c'est-à-dire au diamètre que présente cette bague avant rétreint.

Dans la dernière étape, on procède au serrage de l'outil de rétreint pour amener les mâchoires 32 et l'entretoise 42 qu'elles contiennent dans leurs positions resserrées respectives. Ce serrage de l'outil de rétreint s'effectue en déplaçant le cône de serrage 34 vers l'arrière, c'est-à-dire dans le sens de la flèche F de la figure 2, tout en maintenant la pince de rétreint 30 fixe par rapport à la bague 26.

Comme on le voit sur la figure 6, l'entretoise 42 comprend avantageusement au moins deux parties mobiles l'une par rapport à l'autre dans son plan, respectivement désignées par les références 42a et 42b. Dans ce cas, l'étape de mise en place de l'entretoise est précédée par une étape d'éloignement relatif des parties 42a et 42b pour définir un passage 46 suffisant pour au moins le support de l'objet à serrer. Dans l'exemple représenté, la largeur minimale L du passage 46, à l'entrée de l'ouverture axiale 44, doit être au moins égale au diamètre d de l'arbre de transmission 12. Ceci permet de positionner l'entretoise non pas en l'enfilant axialement sur l'arbre, mais en l'amenant radialement et en insérant cet arbre par le passage 46. Ensuite, on rapproche les parties 42a et 42b autour de l'arbre 12 jusqu'à ce que le passage 46 soit sensiblement supprimé. On peut alors, tout en gardant l'entretoise sensiblement dans sa position expansée, insérer cette dernière dans les mâchoires 32 de l'outil de rétreint convenablement disposé.

On décrit maintenant plus précisément le dispositif pour la mise en oeuvre du procédé en s'intéressant tout d'abord, en référence à la figure 3, à l'outil de rétreint. Comme on le voit, la pince de rétreint 30 présente une cavité 50 délimitée vers l'arrière par les mâchoires 32 et qui est apte à contenir entièrement l'obstacle axial, constitué, dans l'exemple représenté, par le bol 14 et le soufflet 22. Ceci permet d'amener l'outil de rétreint dans une position où les mâchoires 32 sont effectivement dans le plan radial de la bague à rétreindre 26.

On s'intéresse maintenant plus particulièrement à l'entretoise 42 par référence aux figures 4 à 6. Comme on l'a indiqué précédemment, cette entretoise comporte l'ouverture centrale 44 qui est sensiblement circulaire mais qui, selon la forme que l'on veut donner à la bague une fois rétreinte, peut également présenter une forme légèrement différente.

Dans l'exemple représenté, la périphérie externe 52 de l'entretoise 42 est également sensiblement circulaire. On notera qu'il est seulement important que cette périphérie soit adaptée à la périphérie interne des mâchoires 32 de l'outil de rétreint. L'outil de rétreint est d'abord utilisé directement pour rétreindre une grande bague 24 ; la périphérie interne de ses mâchoires est donc de préférence sensiblement circulaire. La seconde bague 26 n'est rétreinte qu'ensuite, par l'intermédiaire de l'entretoise 42.

Dans certains cas, l'outil de rétreint ne sera utilisé que pour rétreindre une bague à rétreindre située en arrière d'un obstacle axial éventuellement différent de celui, cité en exemple, que constituent un bol de joint homocinétique et un soufflet.

En fait, le procédé et le dispositif pour sa mise en oeuvre peuvent être utilisés dès que l'on souhaite rétreindre une bague sur un support cylindrique qui, d'un premier côté dit "côté avant", comporte au moins un obstacle axial qui empêche l'utilisation d'un outil de rétreint classique par ce premier côté. Il peut arriver que ce côté avant soit tout de même le côté le plus accessible, soit parce que le côté dit "arrière" présente également un obstacle, tel que le premier joint homocinétique 13 et le premier soufflet 16 de la figure 1, soit parce que la position de l'extrémité arrière du support est incompatible avec l'utilisation d'un outil de rétreint classique ; cette dernière éventualité se produit lorsque la distance entre l'extrémité arrière du support et un autre élément est trop faible.

Il n'est alors pas nécessaire que la périphérie interne des mâchoires soit circulaire, il suffit que sa forme permette que les efforts agissant sur l'entretoise lors du rétreint de la bague soient répartis conformément aux voeux de l'utilisateur, c'est-à-dire, le plus souvent, de façon homogène.

Dans le cas où l'entretoise comporte deux parties 42a et 42b mobiles l'une par rapport à l'autre dans son plan, on prévoit avantageusement que ces deux parties sont respectivement solidaires d'un premier et d'un second leviers d'une pince telle que la pince 49 représentée schématiquement sur la figure 6. Ainsi, l'étape d'éloignement relatif des parties 42a et 42b, de même que leur étape de rapprochement relatif, s'effectue en actionnant les leviers de la pince.

Comme on le voit sur les figures, l'entretoise 42 est avantageusement constituée par une pluralité de secteurs angulaires rigides. Dans l'exemple représenté, ces secteurs sont au nombre de 8 respectivement désignés par les références 54a, 54b, 54c, 54d, 54e, 54f, 54g et 54h. Au moins certains de ces secteurs sont reliés entre eux par des éléments élastiques 56. Comme on le voit sur la figure 4, la position expansée de l'entretoise est déterminée par la position relâchée des éléments élastiques. Au contraire, pour amener l'entretoise 42 dans la position resserrée illustrée par la figure 5, ces éléments élastiques sont resserrés de manière à sensiblement supprimer le jeu J entre les secteurs angulaires rigides.

Dans l'exemple représenté, aucun élément de liaison directe, tel qu'un élément élastique 56, n'est prévu entre les deux secteurs angulaires contigus 54a et 54h. Ceci permet de définir le passage 46 précité en considérant, par référence à la figure 6, que la partie 42a de l'entretoise comporte un premier groupe de secteurs angulaires 54a, 54b, 54c et 54d, tandis que la partie 42b comporte un second groupe de secteurs 54e, 54f, 54g et 54h. Lorsque l'on écarte les deux parties de l'entretoise, l'élément élastique qui relie les secteurs 54d et 54e constitue une charnière.

Si la position de l'extrémité arrière du support permet d'enfiler l'entretoise axialement, sans toutefois laisser l'espace nécessaire à la disposition de l'outil de rétreint, tous les secteurs angulaires peuvent être reliés entre eux par des éléments élastiques.

Les éléments élastiques 56 peuvent être constitués par des ressorts qui, en position resserrée de l'entretoise, sont susceptibles de venir se loger dans des cavités des bords radiaux des secteurs angulaires rigides, telles que la cavité 58 définie par deux alésages pratiqués dans les secteurs 54a et 54b. On peut également réaliser ces éléments dans un matériau élastiquement déformable tel que du caoutchouc.

## Revendications

1. Procédé pour rétreindre une bague à rétreindre (26), placée autour d'un objet (22) à serrer sur un support cylindrique (12) et derrière un obstacle axial (14, 22) lié au support (12), au moyen d'un outil de rétreint (30, 34) comportant des mâchoires (32) susceptibles d'adopter une position expansée et une position resserrée, caractérisé en ce qu'il comporte les étapes suivantes :
a) - on enfile l'outil de rétreint (30, 34), avec ses mâchoires (32) en position expansée, autour du support (12), par dessus l'obstacle axial (14, 22), jusqu'à ce que lesdites mâchoires (32) soient disposées dans le plan radial de la bague à rétreindre (26),
b) - on met en place dans les mâchoires (32) en position expansée de l'outil de rétreint (30, 34), par l'arrière de l'obstacle axial (14, 22), une entretoise (42) présentant une ouverture centrale (44) sensiblement circulaire et susceptible d'adopter elle-même une position resserrée et une position expansée dans laquelle la périphérie externe (52) de ladite entretoise (42) est adaptée à la périphérie interne des mâchoires (32) en position expansée, tandis que le diamètre de son ouverture centrale (44) est sensiblement égal à celui de la bague à rétreindre (26),
c) - enfin on procède au serrage de l'outil de rétreint (30, 34) pour amener les mâchoires (32) et l'entretoise (42) qu'elles contiennent dans leurs positions resserrées respectives.

2. Procédé selon la revendication 1, caractérisé en ce que, l'entretoise (42) comprenant au moins deux parties (42a, 42b) mobiles l'une par rapport à l'autre dans son plan, l'étape de mise en place de ladite entretoise (42) est précédée par une étape d'éloignement relatif desdites parties (42a, 42b) pour définir un passage (46) suffisant pour au moins le support (12) de l'objet à serrer (22) et par une étape de rapprochement de ces parties (42a, 42b) autour dudit support (12) jusqu'à ce que le passage (46) soit sensiblement supprimé.

3. Dispositif pour la mise en oeuvre du procédé selon l'une des revendications 1 et 2, comprenant un outil de rétreint (30, 34) comportant des mâchoires (32) susceptibles d'adopter une position expansée et une position resserrée, caractérisé en ce que l'outil de rétreint (30, 34) présente une cavité (50) délimitée vers l'arrière par ses mâchoires (32) et apte à contenir entièrement l'obstacle axial (14, 22), et en ce que le dispositif comporte une entretoise (42) présentant une ouverture centrale (44) sensiblement circulaire et susceptible d'adopter elle-même une position resserrée et une position expansée, la périphérie externe (52) de ladite entretoise (42) étant adaptée à la périphérie interne des mâchoires (32) en position expansée.

4. Dispositif selon la revendication 3, caractérisé en ce que l'entretoise (42) comprend deux parties (42a, 42b) mobiles l'une par rapport à l'autre dans son plan.

5. Dispositif selon la revendication 4, caractérisé en ce que les deux parties (42a, 42b) de l'entretoise (42) sont susceptibles d'être respectivement attelées aux deux leviers d'une pince (49).

6. Dispositif selon l'une quelconque des revendications 3 à 5, caractérisé en ce que l'entretoise (42) est constituée par une pluralité de secteurs angulaires rigides (54a, 54b, 54c, 54d, 54e, 54f, 54g, 54h) dont certains au moins sont reliés entre eux par des éléments élastiques (56).

## Claims

1. A process for shrinking a ring to be shrunk (26), placed around an object (22) to be clamped on a cylindrical support (12) and behind an axial obstacle (14, 22) connected to the support (12), by means of a shrinking tool (30, 34) comprising jaws (32) capable of adopting an expanded position and a retracted position, characterised in that it comprises the following steps of :
a) - fitting the shrinking tool (30, 34), with its jaws (32) in expanded position, around the support (12), over the axial obstacle (14, 22), until said jaws (32) are disposed in the radial plane of the ring to be shrunk (26),
b) - positioning in the jaws (32) in expanded position of the shrinking tool (30, 34), by the rear of the axial obstacle (14, 22), a spacer (42) presenting a substantially circular central opening (44) and itself capable of adopting a retracted position and an expanded position in which the outer periphery (52) of said spacer (42) is adapted to the inner periphery of the jaws (32) in expanded position, while the diameter of its central opening (44) is substantially equal to that of the ring to be shrunk (26),
c) finally, tightening the shrinking tool (30, 34) in order to bring the jaws (32) and the spacer (42) that they contain into their respective retracted positions.

2. The process according to claim 1, characterised in that, the spacer (42) comprising at least two parts (42a, 42b) mobile with respect to one another in its plane, the step of positioning said spacer (42) is preceded by a step of spacing said parts (42a, 42b) apart with respect to one another in order to define a passage (46) sufficient for at least the support (12) of the object to be clamped (22) and by a step of bringing these parts (42a, 42b) together around said support (12) until the passage (46) is substantially eliminated.

3. Device for carrying out the process according to claim 1 or 2, comprising a shrinking tool (30, 34) which comprises jaws (32) capable of adopting an expanded position and a retracted position, characterised in that the shrinking tool (30, 34) presents a cavity (50) defined towards the rear by its jaws (32) and adapted to contain the axial obstacle (14, 22) entirely, and in that the device comprises a spacer (42) presenting a substantially circular central opening (44) and itself capable of adopting a retracted position and an expanded position, the outer periphery (52) of said spacer (42) being adapted to the inner periphery of the jaws (32) in expanded position.

4. The device according to claim 3, characterised in that the spacer (42) comprises two parts (42a, 42b) mobile with respect to one another in its plane.

5. The device according to claim 4, characterised in that the two parts (42a, 42b) of the spacer (42) are capable of being respectively coupled to the two levers of pincers (49).

6. The device according to any one of claims 3 to 5, characterised in that the spacer (42) is constituted by a plurality of rigid angular sectors (54a, 54b, 54c, 54d, 54e, 54f, 54g, 54h) of which at least certain are connected together by elastic elements (56).

## Patentansprüche

1. Verfahren zum Krimpen eines Krimprings (26), der um ein auf einem zylindrischen Träger (12) zusammenschnürendes Bauteil (22) und hinter einem mit dem Träger (12) gekoppelten axialen Hindernis (14, 22) herumgelegt ist, mittels eines Krimpwerkzeugs (30, 34) mit Backen (32), die eine geweitete Stellung und eine verengte Stellung einzunehmen vermögen, dadurch gekennzeichnet, daß es die folgenden Schritte umfaßt:
a) - man fädelt das Krimpwerkzeug (30, 34) mit seinen Backen (32) in der geweiteten Stellung auf den Träger (12) über das axiale Hindernis (14, 22) hinweg, bis die genannten Backen (32) in der Radialebene des Krimprings (26) angeordnet sind,
b) - man legt in die Backen (32) in der geweiteten Stellung des Krimpwerkzeugs (30, 34) von hinter dem axialen Hindernis (14, 22) ein Zwischenstück (42) ein, das eine im wesentlichen kreisförmige Mittelöffnung (44) aufweist und selbst eine verengte Stellung und eine geweitete Stellung einzunehmen vermag, in der der äußere Umfang (52) des genannten Zwischenstücks (42) an den inneren Umfang der Backen (32) in der geweiteten Stellung angepaßt ist, während der Durchmesser seiner Mittelöffnung (44) im wesentlichen gleich dem des Krimprings (26) ist,
c) - man drückt schließlich das Krimpwerkzeug (30, 34) zusammen, um die Backen (32) und das von ihnen aufgenommene Zwischenstück (42) in ihre jeweiligen verengten Stellungen zu bringen.

2. Verfahren nach Anspruch 1, bei dem das Zwischenstück (42) wenigstens zwei in seiner Ebene relativ zueinander bewegliche Teile (42a, 42b) aufweist, dadurch gekennzeichnet, daß dem Schritt des Einlegens des Zwischenstücks (42) ein Schritt des Auseinanderrückens der Teile (42a, 42b) vorhergeht, um einen für wenigstens den Träger (12) des zusammenzuschnürenden Bauteils (22) ausreichenden Durchgang (46) festzulegen, und ein Schritt des Annäherns dieser Teile (42a, 42b) um den genannten Träger (12), bis der Durchgang (46) im wesentlichen aufgehoben ist, vorhergeht.

3. Vorrichtung zum Ausführen des Verfahrens nach einem der Ansprüche 1 und 2, mit einem Krimpwerkzeug (30, 34) mit Backen (32), die eine geweitete Stellung und eine verengte Stellung einzunehmen vermögen, dadurch gekennzeichnet, daß das Krimpwerkzeug (30, 34) eine Vertiefung (50) aufweist, die nach hinten durch seine Backen (32) begrenzt ist und zum vollkommenen Aufnehmen des axialen Hindernisses (14, 22) geeignet ist, und dadurch daß die Vorrichtung ein Zwischenstück (42) mit einer im wesentlichen kreisförmigen Mittelöffnung (44) aufweist und selbst eine verengte Stellung und eine geweitete Stellung einzunehmen vermag, wobei der äußere Umfang (52) des Zwischenstücks (42) an den inneren Umfang der Backen (32) in der geweiteten Stellung angepaßt ist.

4. Vorrichtung nach Anspruch 3, dadurch gekennzeichnet, daß das Zwischenstück (42) zwei in seiner Ebene relativ zueinander bewegliche Teile (42a, 42b) aufweist.

5. Vorrichtung nach Anspruch 4, dadurch gekennzeichnet, daß die zwei Teile (42a, 42b) des Zwischenstücks (42) an je einen der zwei Hebel einer Zange kuppelbar sind.

6. Vorrichtung nach einem der Ansprüche 3 bis 5, dadurch gekennzeichnet, daß das Zwischenstück (42) durch eine Mehrzahl steifer Winkelsektoren (54a, 54b, 54c, 54d, 54e, 54f, 54g, 54h) gebildet ist, von denen wenigstens bestimmte untereinander durch elastische Elemente (56) verbunden sind.
